# EUROPEAN PATENT APPLICATION

(11) **EP 2 511 007 A1**
(43) Date of publication of application: **17.10.2012**
(21) Application number: 12174489.0
(22) Date of filing: 29.11.2007
(51) Int. Cl.: B01J 19/00

(54) **Devices and methods for radiation assisted chemical processing**

(62) Divisional of application: 07301600.8
(71) Applicant: Corning Incorporated, Corning, New York 14831 (US)
(72) Inventor: Barthe, Philippe, 77130 VILLE SAINT JACQUES (FR); Dannoux, Thierry, 77210 AVON (FR); Mayolet, Alexandre, New York, 14830 (US)
(74) Representative: Le Roux, Martine

(57) **Abstract**

Disclosed is a device for performing radiation assisted chemical processing including a fluid path, defined at least in part by a first surface of a wall transparent to radiation useful for performing radiation assisted chemical processing, and a gas discharge or plasma chamber arranged for producing the radiation, wherein the chamber is defined at least in part by a second surface of the transparent wall, opposite the first. Also disclosed is a method of forming a photocatalytic reactor, the method comprising the steps of providing a fluid path having, along at least a part thereof, a non-circular cross section, the path defined at least in part by a first surface of a wall of a material transparent to a desired photocatalytic radiation; wash-coating the fluid path so as to deposit a photocatalytic material therein, wherein the step of wash-coating includes depositing the photocatalytic material on a first portion of the of non-circular cross section of the path, and not depositing the photocatalytic material on, or removing the photocatalytic material from, a second portion of the non-circular cross section of the path, the second portion including at least some of the first surface of the wall of transparent material.

## Description

### BACKGROUND

The present invention relates generally to devices and methods for radiation assisted chemical processing, and particularly to devices and methods for increasing the efficiency of radiation assisted chemical processing.

Radiation assisted chemical processing includes processes in which radiation acts directly on reactant species, such as to activate particular sites or to break particular chemical bonds, for example. Radiation assisted chemical processing further includes processes in which radiation acts on photocatalytic material(s) to generate electrons and holes that either recombine or remain at or migrate to the surface of the material(s), where they have opportunity to react with adsorbed surface species in a reactant fluid stream (such as adsorbed O, adsorbed H₂O, surface OH, and so forth), generating active species (such as O²⁻, OH⁻, H₂O₂, and so forth) that will enable desired reactions in the reactant(s). Radiation assisted chemical processing has found application in chemical synthesis, water and air purification, pollution abatement, and so forth.

### SUMMARY

The present invention includes a device for performing radiation assisted chemical processing including a fluid path defined at least in part by a first surface of a wall transparent to radiation useful for radiation assisted chemical processing, and a gas discharge or plasma chamber arranged for producing the radiation, wherein the chamber is defined at least in part by a second surface of the transparent wall, opposite the first. Thus very close coupling is provided between the radiation source and the photocatalytic reaction area.

The present invention further includes a method of forming a photocatalytic reactor, the method comprising the steps of providing a fluid path having, along at least a part thereof, a non-circular cross section, the path defined at least in part by a first surface of a wall of a material transparent to a desired photocatalytic radiation; wash-coating the fluid path so as to deposit a photocatalytic material therein, wherein the step of wash-coating includes depositing the photocatalytic material on a first portion of the of non-circular cross section of the path, and not depositing the photocatalytic material on, or removing the photocatalytic material from, a second portion of the non-circular cross section of the path, the second portion including at least some of the first surface of the wall of transparent material. Thus radiation may efficiently enter the fluid path and fall on the inward surfaces of the photocatalytic material therein.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description, serve to explain the principles and operations of the invention.

### BRIEF DESCRIPTION OF THE DRAWINGS

Figure 1 is a plan view of one embodiment device useful for radiation assisted chemical processing according to the present invention;

Figure 2 is a plan view of another embodiment of a device useful for radiation assisted chemical processing according to the present invention;

Figure 3 is a plan view of yet another embodiment of a device useful for radiation assisted chemical processing according to the present invention;

Figures 4-7 are cross sectional views of respective embodiments of devices useful for radiation assisted chemical processing according to the present invention;

Figure 8 is a cross sectional view of an alternative embodiment of the present invention, for photocatalytic chemical processing, corresponding to an enlarged view of a portion of the cross-section of Figure 4;

Figure 9 is a cross section of yet another alternative embodiment of a device useful for photocatalytic chemical processing according to the present invention;

Figure 10 is an enlarged view of a portion of the cross section of Figure 9;

Figures 11A-11I are cross-sectional views of certain steps and/or alternate steps in a method of forming various structures useful in forming devices according to the present invention;

Figures 12A-12D are cross-sectional views of certain steps and/or alternate steps in another method of forming various structures useful in forming devices according to the present invention;

Figures 13A-13C are cross-sectional views of certain steps and/or alternate steps in yet another method, a variation of the method shown in Figures 12A-12D, of forming various structures useful in forming devices according to the present invention;

Figures 14 and 15 are cross sectional views of alternative embodiments of the present invention, for photocatalytic chemical processing, similar to the embodiment of Figure 8 but using a thin film photocatalyst material(s) rather than wash coat photocatalyst material(s).

### DETAILED DESCRIPTION

Reference will now be made in detail to the presently preferred embodiments of the invention, instances of which are illustrated in the accompanying drawings. Whenever possible, the same reference numerals will be used throughout the drawings to refer to the same or like parts.

As an aid in understanding the present invention fully, it is useful to review instances of fabrication methods that may be useful to form structures useful in the context of the present invention.

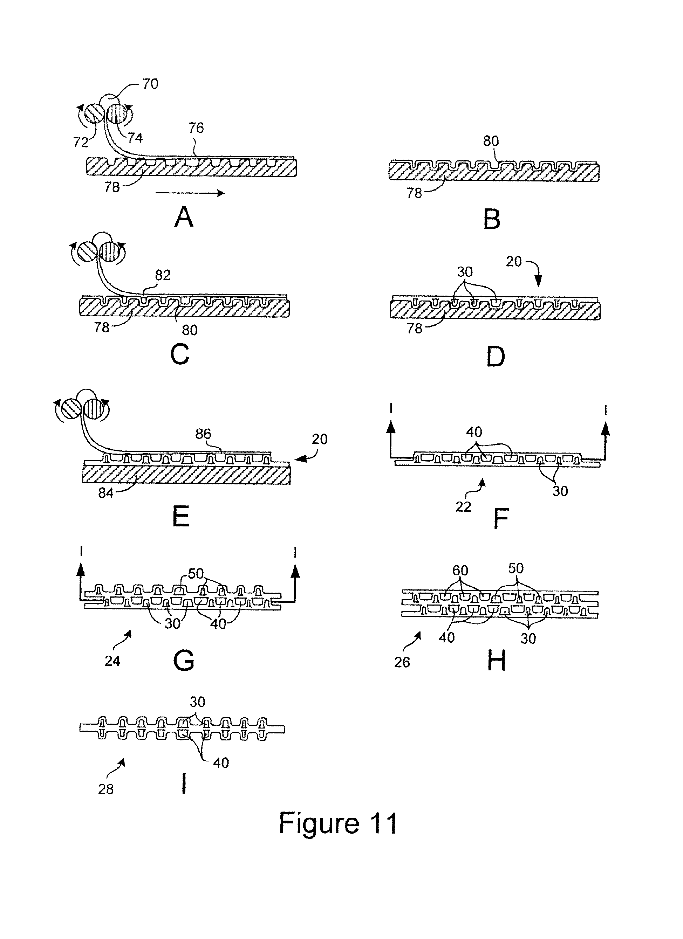

For ease of understanding only and not by way of limitation, one such method is shown in Figures 11A-11I. Figures 11A-11I show a cross-sectional view of certain steps and/or alternate steps in a method of forming various glass structures, such as a first glass structure 20 having a single set of channels in the form of first channels 30 as shown in Figure 11D, further glass structures 22 or 28 having two complementary sets of channels, first channels 30 and second channels 40 as shown in Figure 11F or 11I, and/or further glass structures 24 or 26 having three or four sets of channels as shown in Figures 11G and 11H.

The first glass structure 20 may be formed by supplying a glass gob 70 from a feeder tank (not shown) onto two heated rotating rollers 72 and 74, as shown in Figure 11A. A soft glass sheet 76 may then be rolled out over a moving mold 78 having vacuum conduits therethrough (conduits not shown in the figure). The sheet 76 may be vacuum formed immediately while still soft, producing a formed sheet 80 as shown in Figure 11B, with the thickness of the formed sheet 80 reduced relative to the soft glass sheet 76 by the vacuum redraw. In a second and immediately following pass, a second soft glass sheet 82 may be put over the formed sheet 80, as shown in Figure 11C.

The second soft glass sheet 82 immediately closes the upper surface of the formed sheet 80, as shown in Figure 11D, forming closed first channels 30 in the resulting the intermediate glass structure 20. The first channels 30 are thus created and closed quickly, in as short as about 5 to 10 seconds.

One type of glass structure particularly useful in the present invention, glass structure 22, may be formed by removing the intermediate structure 20 with its first channels 30 from the mold 78, and placing it in an inverted position on a support 84. The previously unclosed complementary channels 40 are then covered with a third soft glass sheet 86, as shown in Figure 11E, forming closed second channels 40 and resulting in the glass structure 22 of Figure 11F, having both first channels 30 and second channels 40, which are complementary in that they have, at essentially every point along each channel, a common wall in the form of the more vertical portions of formed sheet 80 and they are nested together generally within a common generally planar volume.

In one alternative to the steps shown in Figure 11E and 11F, a glass structure of the type of first glass structure 20 may be used to close channels on a formed sheet 80 such as the one shown in Figure 11B, by forming them together while hot or, if necessary, by stacking and sintering previously formed parts. The resulting channels may desirably be directly aligned, resulting in the glass structure 28 of Figure 11I.

In another alternative to the steps shown in Figures 11E and 11F, the first glass structure 20 of Figure 11D may be stacked with another like it while still soft, or, if necessary, the two parts may be stacked and sintered together, thus forming the glass structure 24 of Figure 11G, having first channels 30, second channels 40, and third channels 50. Even more layers of channels may be similarly formed if desired, such as by further stacking of structures such as first glass structure 20, and/or by closing off open channels with an additional flat layer, such as closing off the open channels of structure 24 with an additional flat layer, which results in a glass structure 26 as shown in Figure 11H, having first channels 30, second channels 40, third channels 50 and fourth channels 60.

As an instance of desirable process parameters in the methods of Figures 11A-11I for a particular glass, for forming 7740 Pyrex®, desirable thermal conditions are generally 1350°C glass delivered onto 650°C heated rollers and mold. A release agent may be used such as carbon black from acetylene cracking. The thinner the glass sheet, the higher the roller temperature should be. For the purposes of the present invention the walls between channels such as between channels 30 and 40 are desirably as thin as reasonably practical to still provide sufficient robustness. Thickness should generally be as thin as will provide the needed mechanical robustness, desirably 2 mm or less and more desirably 1 mm or even 0.5 mm or less. Sheets as this as 0.8 mm have previously been rolled and vacuum formed with this process, offering thicknesses as low as 0.2 mm or less at the bottom portions of the formed shape. For additional discussion the method of Figure 11A-11I and related methods, see, for example, European Patent Application No. 04291114, High Thermal Efficiency Glass Microfluidic Channels and Methods for Forming the Same, filed 30 April 2004.

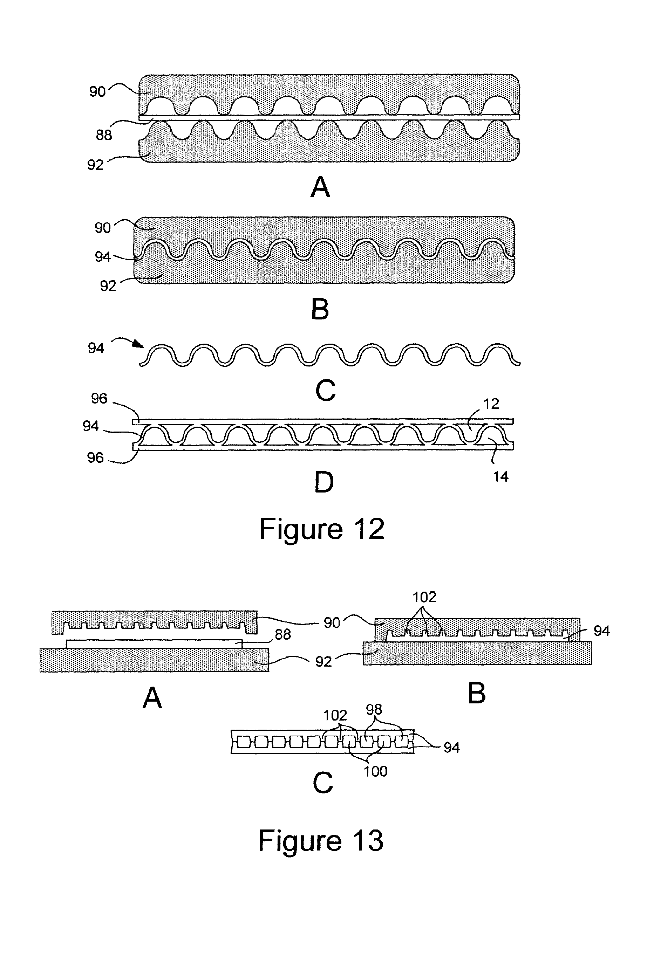

It will be appreciated by the reader that, when using forming process described with respect to Figures 11A-11I, or similar processes involving the use of a single undulated formed sheet 80 as in Figure 11B, or when considering channels defined on opposite sides of such a sheet, the resulting first and second sets of channels 30, 40 are complementary, that is, they share a common wall and they are nested together generally within a common generally planar volume. Channels formed by the method of Figures 12A-12D and 13A-13C, described below, may also be complementary, as in Figures 12A-12D, or may be formed in more varied geometries, such as in Figures 13A-13C.

Figures 12A-12D show another instance of a fabrication method that may be applied to form structures useful in the context of the present invention. According to the method of Figures 12A-D, a sheet 88 of glass or glass-containing material is placed between cooperating molds or mold halves 90 and 92, the molds formed of a material compatible with glass over a broad range of temperatures. The molding material is desirably carbon, desirably porous carbon of about 10% open porosity or more, for instance, such as grade 2450 PT or 2020PT graphite manufactured by Carbone Lorraine of Gennevilliers, France. Techniques such as CNC machining, diamond ultra high speed machining, electro discharge machining, or a combination thereof can be used to make specific molding surfaces. The molding surface design can vary depending upon the desired features.

A release agent, desirably carbon soot, may optionally be used on the sheet 88 and/or the molds 90 and 92. Pressure is desirably applied to the interface between the glass-containing sheet 88 and the molds 90 and 92. This may be achieved by means of a load, for instance. The molds 90 and 92 and the sheet 88 are then heated together until the sheet softens sufficiently to form to the contours of the molds 90 and 92, resulting in molded sheet 94. The molds 90 and 92 and the molded sheet 94 are then cooled together, and the sheet 94 is removed from the molds. The molded sheet 94 may then be placed between flat sheets 96 of glass or a glass-containing material or any other suitable material, and the assembly may be adhered together, such as by sintering with or without a frit, by suitable adhesive, or by other suitable means. The resulting structure 22 corresponds to the structure 22 of Figure 11A-11I. The molded sheet 94 formed as shown in Figures 12A-12C may also be employed to form structures corresponding to other structures of Figures 11A-11I, if desired.

As another instance of a fabrication method that may be applied to form structures useful in the context of the present invention, the method of Figures 12A-12D may be modified as shown in Figures 13A-13C such that process channels 98 and neighboring channels 100 are not necessarily complementary. As shown in Figures 13A-13C, the molds 90 and 92 not be either identical or cooperating interpenetrating structures as in Figures 12A and 12B, but may instead be more or less independent shapes, such as one shaped mold 90 and one flat-surfaced mold 92. The resulting molded sheet 94 may thus have partitions or walls 102 formed on one or more surfaces thereof. The channels formed by the process shown in Figures 13A-13C need not be formed on opposite sides of a single sheet, but may instead be formed between two molded sheets 94, which need not be identical, that are joined together by sintering with or without frit, by suitable adhesive or other suitable means, such that the partitions or walls 102 separate process channels 98 and neighboring channels 100, as shown in Figure 13C. Further details concerning processes like those described with respect to Figures 12 and 13 may be found, for example, in European Patent Application Nos. 07300835, Method for Masking Microfluidic Devices and Devices Produced Thereof, and 07300836, Methods for Forming Compositions Containing Glass, filed 28 February 2007.

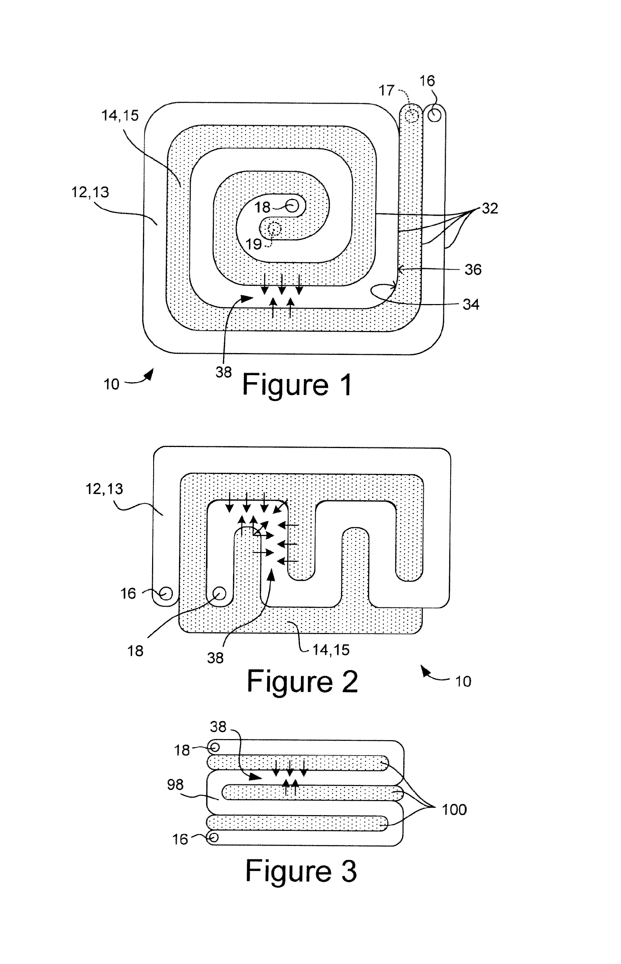

An example of the use of complementary channels in a device according to the present invention is shown in plan view in Figure 1, which may be considered as a cross section of either Figure 11F or 11G, taken along the lines indicated therein.

Figure 1 shows a schematic plan view of a device 10 according to the present invention, useful for performing radiation assisted chemical processing. The device 10 includes first and second complementary channels 12 and 14, corresponding respectively to first channels 30 (now seen to be one channel 12) and second channels 40 (now seen to be one channel 14). Both channels 12 and 14 are defined in part by more or less a vertical glass wall 32 originally shaped by the forming of formed sheet 80. Complementary channel 12 has input and output ports 16 and 18 formed therein to give fluid access to channel 12, thus forming a fluid path 13. Complementary channel 14 may be provided with electrodes 17 and 19 at the ends thereof, and contains a gas mixture appropriate for producing a gas or plasma discharge, thus forming a gas discharge or plasma discharge chamber 15 to produce radiation useful for radiation assisted chemical processing.

As will be appreciated from the foregoing, a first surface 34 of the glass wall 32 defines, at least in part, the fluid path 13, while a second surface 36 of the glass wall 32 defines, at least in part, the chamber 15. Chamber 15 thus constitutes a gas discharge or plasma discharge chamber formed within a volume, corresponding to channel 14, at least partly defined by a second surface 36 of the same transparent wall 32 that at least partly defines the fluid path 13. This allows for very direct and efficient coupling into fluid path 13, through transparent wall 32, of radiation produced in chamber 15, as suggested by the arrows 38 in Figure 1.

Other configurations of channels may be employed, including other configurations of complementary channels such as the configuration shown in the embodiment of Figure 2, for instance. For discharge chambers having more unusual shapes such as chamber 15 of Figure 2, more than two electrodes may be employed or the chamber may be subdivided, or, desirably, the gases in the chamber 15 may be externally excited, such as by a microwave beam in combination with suitably arranged magnetic fields, or by other suitable means. Where the structure forming process employed is sufficiently flexible, such as in the forming process of Figures 13A-13C, non-complementary channel structures may be employed. An instance of such non-complementary channels is shown in Figure 3, in which a process or reactant channel 98 is integrated with three separate channels 100 that form chambers for producing radiation. More complex arrangements are of course possible.

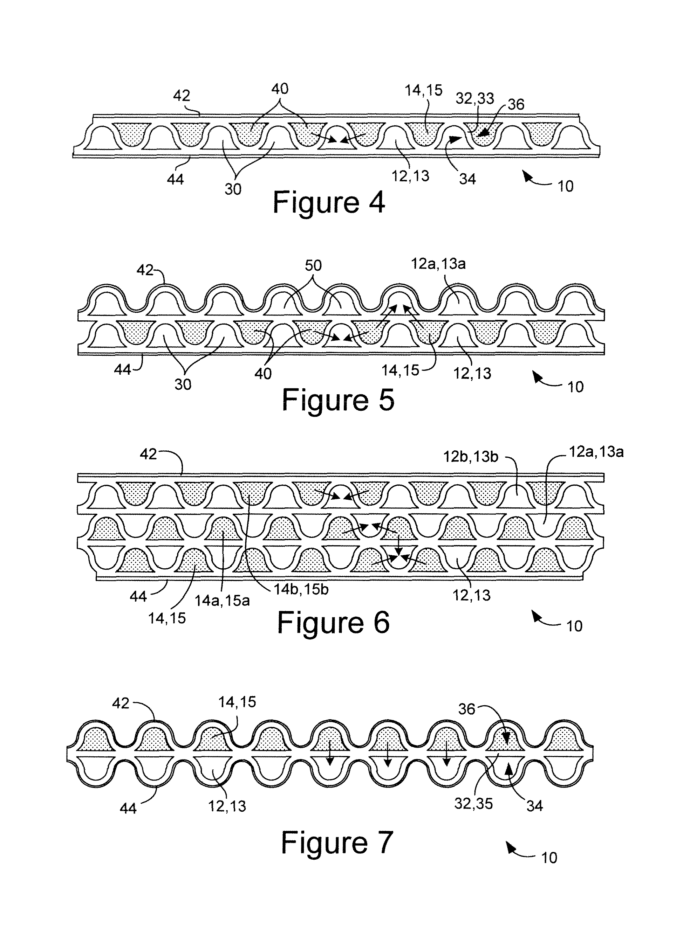

Figures 4-7 show schematic cross sections of various embodiments of the present invention with various numbers of sets of channels and various arrangements of channels. In each case, the device 10 includes a fluid path 13 defined at least in part by a first surface 34 of a transparent wall 32; a gas discharge or plasma chamber 15 arranged for producing radiation useful for radiation assisted chemical processing, the chamber 15 defined at least in part by a second surface 36 of the transparent wall 32, opposite the first surface 34.

In the embodiment of the device 10 shown in Figure 4, a fluid path 13 arranged within a first set 12 of fluid channels is closely connected to a discharge chamber 15 arranged within a second set 14 of fluid channels complementary to the first set 12. The fluid path 13 and the chamber 15 are formed on opposing surfaces of a wall 32 in the form of an undulated glass sheet 33. The close association of the fluid path 13 and the discharge chamber 15 thus obtained allows for radiation useful for radiation assisted chemical processing to easily and efficiently travel from the chamber 15 to the path 13, as suggested in part by the arrows in Figures 1-7.

Further to the embodiments of Figures 4-7, a first reflective coating 42 is disposed on one major outer surface of the device 10. The coating may be a metal film or metal thin film, a dielectric or dielectric multilayer coating or any other suitable coating effective to reflect radiation useful for radiation assisted chemical processing back toward the interior of the device 10. Desirably, the device 10 has second reflective coating 44 on another major outer surface of the device, similarly effective to reflect radiation useful for radiation assisted chemical processing back toward the interior of the device 10.

In the embodiment of Figure 5, there are first channels 12 and third channels 12a present which, in this embodiment, each contain a fluid path 12, 12a. The fluid paths 12, 12a may be independent or may be joined serially or in parallel as desired. Presently preferred is to join them in series for a longer reaction path and/or longer reaction time. In this embodiment, the first reflective coating 42 is disposed on a nonflat surface but is effective nonetheless to reflect desirable radiation back into the device 10.

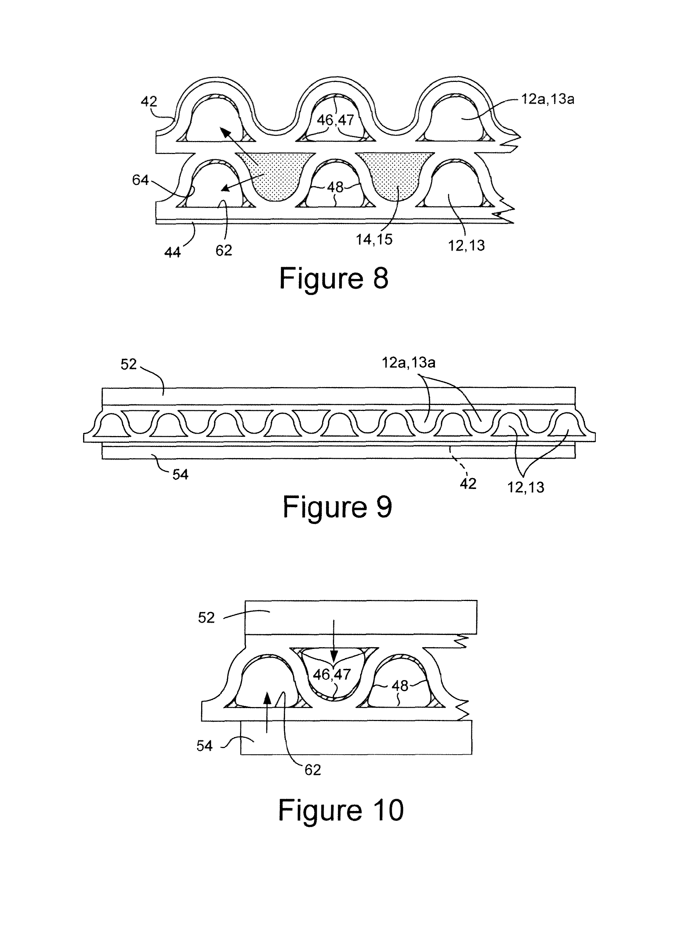

As shown by the embodiment of Figure 6, the basic principles of the present invention can be readily expanded beyond even three-layer devices as in Figure 4. In the embodiment of Figure 6, three sets of channels 12, 12a and 12b that form fluid paths 13, 13a and 13b are interspersed with three sets of channels 14, 14a and 14b that form one or more discharge chambers 15, 15a and 15b. As in the embodiment of Figure 5, these of channels sets may be interconnected serially or in parallel, as desired. According to one alternative embodiment of the present invention, because of positioning of catalyst material within the channels 12, 12a and 12c explained below with respect to Figures 8 and 10, more radiation will tend to reach fluid path 13 than paths 13a and 13b, as indicated by the clustered arrows in Figure 6. For this reason, reactants could desirably be fed either first of all or last of all, or in the center of a process, through fluid path 13, depending on which portion of the process would benefit from greater radiation.

Figure 7 shows an embodiment in which the fluid path 13 and the chamber 15 are formed on opposing surfaces 34,36 of a transparent wall 32 in the form of a flat glass sheet 35 rather than an undulating one. In embodiments employing photocatalytic material, the curvature of the structure may desirably be selected to cause the reflective layers 42, 44, to focus the radiation from the chamber 15 onto photocatalytic material located on surfaces within the fluid path 13.

In all devices of the present invention, the fluid path is desirably of limited cross section to allow thorough irradiation of the reactants flowing therein. The fluid path desirably has a maximum cross-sectional dimension of 2 cm or less, more desirably of 1 cm or less, and most desirably of 0.6 cm or less.

Figure 8 is one alternative embodiment of devices according to the present invention employing photocatalytic material for photocatalytic chemical processing. The device of Figure 8 corresponds to the device of Figure 4, but with photocatalytic material added, and the structure shown Figure 8 corresponds to an enlarged view of a portion of the cross section of Figure 4. As shown in the figure, in this embodiment photocatalytic material 46 is positioned on at least one or more first portions 47 of the interior surface of the fluid path(s) 13, 13a. The interior surface of the fluid paths(s) 13, 13a also include one or more second portions 48 that are free, or freer than the first portion(s) 47, of the photocatalytic material 46, so that the second portion 48 is more transparent to useful radiation than the first portion 47. As may be seen in Figure 8, the second portion 48 includes a flat part 62 of the interior walls, as well as a convex part 64 (convex toward the interior) of the interior walls. The one or more second portions 48 that are more or less free of catalyst allow radiation into the fluid paths 13, 13a so that the front surfaces of catalyst material within the fluid paths may be thoroughly and efficiently illuminated.

This advantageous non-uniform coating or positioning of photocatalytic material may be provided for by using a fluid path having, along at least a part thereof, a non-circular cross section, with the path defined at least in part by a first surface of a wall of a material transparent to a desired photocatalytic radiation, then wash-coating said fluid path so as to deposit a photocatalytic material therein, the step of wash-coating including depositing the photocatalytic material on a first portion of the of non-circular cross section of the path, and not depositing the photocatalytic material on, or removing the photocatalytic material from, a second portion of the non-circular cross section of the path, where the second portion including at least some of said first surface of said wall of transparent material.

This is easily accomplished by selecting a fluid path similar to the embodiments shown herein, where the fluid path has a non-circular cross section including a flat part. Wash coating than naturally tends not to deposit on, or to deposit more thinly on, the flat part of the fluid path. Alternatively, if the wash coat is first deposited heavily and then partially removed, it is more quickly removed from the flat portion of the path. Convex (toward the inside) parts also attract less washcoat when depositing and are relieved of the coating earlier when etching. By providing a source of photocatalytic radiation at or near the second portion, the phtotocatalyitic material within the fluid path is well illuminated on the surface facing the reactant.

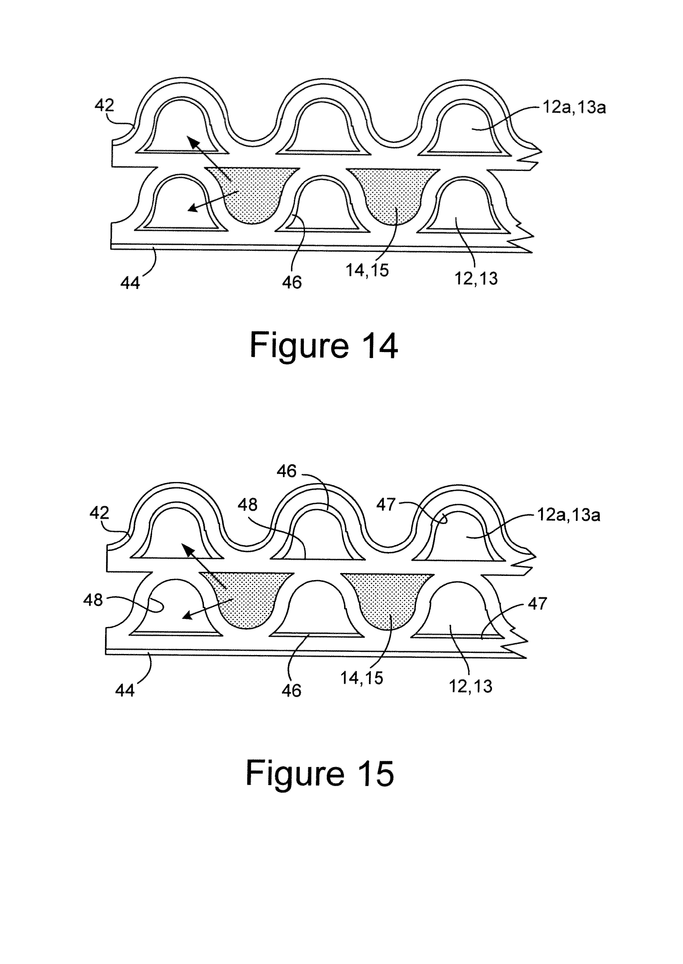

Figures 14 and 15 are cross-sectional views of alternate embodiments to that of Figure 8. In Figures 14 and 15, photocatalytic material 46 is in the form of a thin film photocatalytic material instead of the wash coat photocatalytic material of Figure 8. The thin film material may be deposited by any of various thin film techniques, such as evaporation, sputtering, chemical vapor deposition, plasma assisted chemical vapor deposition, dip coating and so on. In Figure 14, the thin film photocatalytic material 46 is positioned on all interior surfaces of the fluid paths 13 and 13a. In this embodiment, the thickness of the photocatalytic material is selected to be sufficiently thin such that the desired radiation is partially transmitted through the thin film to a degree sufficient to allow all interior surfaces of the fluid paths 13 and 13a to be adequately illuminated by the radiation. In the embodiment of Figure 15, in contrast, the thin film photocatalyst material 46 is deposited only on a first portion 47 of the interior surface of the channel wall, and not on a second portion 48. The embodiment of Figure 15 differs from that of Figure 8 in that the first portion 47 is a different portion in the upper channels 12a of Figure 15 than in the lower channels12. In the lower channels 12, the flat surface of the channel interior surface is the first portion 47 on which photocatalytic material is deposited, while in the upper channels 12a the concave and convex portions of the channel interior surface are the first portion 47 on which photocatalytic material is deposited. This is to allow both for complete irradiation in the directions shown by the arrows in Figures 14 and 15 and for ease of deposition of the thin film material.

The thin film material may be deposited on the flat or undulated substrates before these are brought together and adhered together to form a device like that of Figure 14 or Figure 15. This may be accomplished by cooling each flat or undulated piece separately after it is formed, then coating the requisite surfaces with thin film photocatalyst. The separate flat or undulated substrates may then be brought together and adhered together by sintering or other suitable process.

Another alternative embodiment of the present invention for photocatalytic processing is shown in Figure 9. In the embodiment of Figure 9, no discharge chamber is provided within the glass structure of the device; rather, all sets of channels, 12 and 12a in this embodiment, are used as fluid paths 13 and 13a for reactant(s). Again, paths 13 and 13a may be used, or designed for use, serially or in parallel.

In the embodiment of Figure 9, radiation for photocatalysis is provided by external planar radiation sources 52 and 54. These may take the form of plasma-based emitters, diode or laser diode arrays, or other suitable sources. If desired, the source 54 may optionally be replaced with a reflective coating 42 shown in dashed outline, providing for one-sided illumination from the source 52. In the embodiment of Figure 9 the same distribution of photocatalytic material as in Figure 8 is desirably used, except that the material is positioned in every channel 12,12a. This is shown in Figure 10, which is an enlarged view of a part of the cross section of Figure 9. Radiation from the sources 52, 54 is able easily to enter the fluid paths 12, 12a, as suggested by the arrows in the figure, because the photocatalytic material 46 is absent from one or more portions 48 of the inner surface of the fluid paths, including flat parts 62 which are adjacent to the sources 52, 54.

The devices and methods of the present invention provide for efficient delivery of desired radiation to micro channels for chemical processing, and also for control of washcoat deposition to allow for delivery of desired radiation. These devices and methods have particular utility for chemical processing of various kinds, including but not limited to organic and inorganic synthesis, pollution abatement, water and air purification, and so forth.

In the case of photocatalysis, photocatalysis is useful in both dissolution of organic pollutants and in processes for organic synthesis. In chemical processing, photocatalysis will generally be used to promote functionality of molecules and get high value molecules from lower value reactants. Due to very mild operating conditions (temperatures of room temperature or slightly above room temperature), synthesis is attractive in part because of potential selectivity improvement. As example reactions, cyclohexane selective oxidation to cyclohexanol and cyclohexanone is a reaction to which photocatalysis is commonly applied. See, e.g., Ken-Ichi Shimizu et al,. Applied Catalysis A: General 225 (2002) 185-191. Linear alkyl olefins have also been directly epoxidized using molecular oxygen as an oxidant using photocatalysis, and 1-Hexene has been directly epoxidized to 1-2 epoxyhexane using TiO2 and photocatalysis with a yield of 79 % versus consumed 1-hexene (see Michio Matsumura et al., Journal of Catalysis 176, 76-81 (1998)).

Although titania irradiated with UV radiations is a commonly preferred photocatalyst system, in principle many materials are available, such as those listed in TABLE I below.

**TABLE I**

| Material | Band Gap (eV) | λ(nm) |
|---|---|---|
| GaAs | 1.4 | 886 |
| GaAsP | 2.3 | 551 |
| GaP | 2.3 | 551 |
| CdSe | 1.7 | 730 |
| CdS | 2.5 | 496 |
| ZnO | 3.2 | 388 |
| WO₃ | 3.2 | 388 |
| SnO₂ | 3.8 | 327 |
| TiO₂ (anatase) | 3.2 | 388 |
| TiO₂ (rutile) | 3.0 | 414 |
| SiC | 3.0 | 414 |
| ZnS | 3.7 | 335 |
| SrTiO₃ | 3.2 | 388 |
| Nb₂O₅ | 3.4 | 365 |
| Fe₂O₃ | 2.2 | 564 |

As shown in the table, wavelengths of appropriate radiation span the visible spectrum and extend both above and below it.

In the case of radiation assisted chemical processing in the absence of photocatalysts, radiation wavelengths may be selected such that photon energy levels are matched to selected activation energies of reactants or of particular sites of reactants. Wavelengths may also be selected such that photon energy levels are matched to bond energies of bonds that are desirably broken during the desired chemical processing steps.

While glass and/or glass containing materials such as filled glasses, glass ceramics and the like are preferred for all embodiments of the inventive devices disclosed herein, other materials could profitably be used, depending on the desired application and on the required transparency. Ceramic materials, for example, may be attractive transparent wall materials for certain wavelengths.

It should be noted that although the example embodiments are of limited complexity and size, the methods of the present invention lend themselves to the creation of significantly large devices having hundreds or thousands of channels, both by increasing the surface area of sheets used in the forming process(es) and by stacking the resulting structures as shown in Figure 11H. The present methods may be applied to form undulated glass sheets in meter-length dimensions.

It will be apparent to those skilled in the art that various modifications and variations can be made to the present invention without departing from the spirit and scope of the invention. Thus it is intended that the present invention cover the modifications and variations of this invention provided they come within the scope of the appended claims and their equivalents.

## Claims

1. A device for performing radiation assisted chemical processing, the device comprising:
a fluid path defined at least in part by a first surface of a wall transparent to radiation useful for radiation assisted chemical processing;
a gas discharge or plasma chamber arranged for producing the radiation useful for radiation assisted chemical processing, the chamber defined at least in part by a second surface of the transparent wall, opposite the first surface.

2. The device according to claim 1 further including a reflective coating on a major outer surface of the device effective to reflect the radiation back toward the interior of the device.

3. The device according to claim 1 further including a reflective coating on at least two major outer surfaces of the device, effective to reflect the radiation back toward the interior of the device.

4. The device according to any of claims 1-3 wherein the fluid path and the chamber are formed on opposing surfaces of an undulated substrate.

5. The device according to any of claims 1-3 wherein the fluid path and the chamber are formed on opposing surfaces of a flat substrate.

6. The device according to any of claims 1-5 wherein the fluid path has a maximum cross-sectional dimension of less than 1 cm.

7. The device according to any of claims 1-5 wherein the transparent wall has a maximum thickness of less than or equal to 0.5 mm.

8. The device according to any of claims 1-7 wherein the fluid path further comprises a thin film photocatalytic material positioned on at least a first portion of the interior surface of the fluid path.

9. The device according to any of claims 1-7 wherein the fluid path further comprises a wash coat photocatalytic material positioned on at least a first portion of the interior surface of the fluid path.

10. The device according to either of claims 8 and 9 wherein the fluid path includes a second portion that is free, or freer than said first portion, of said photocatalytic material, said second portion being more transparent to the radiation than said first portion.
